# EUROPÄISCHE PATENTSCHRIFT

(11) **EP 0 465 536 B1**
(45) Veröffentlichungstag und Bekanntmachung des Hinweises auf die Patenterteilung: **09.03.1994**
(21) Anmeldenummer: 90905462.9
(22) Anmeldetag: 03.04.1990
(51) Int. Cl.: E01C 5/00

(54) **WINKELSTEIN ZUR FLÄCHENBEFESTIGUNG**
ANGLED PAVING STONE
PIERRE ANGULAIRE POUR CONSOLIDER UNE SURFACE

(30) Priorität: 04.04.1989 EP 89105898
(43) Veröffentlichungstag der Anmeldung: 15.01.1992
(73) Patentinhaber: UNI-International Bausysteme GmbH & Co., D-76473 Iffezheim (DE)
(72) Erfinder: BARTH, Günther, D-7582 Bühlertal (DE); VON LANGSDORFF, Fritz, D-7551 Rastatt 22 (DE); VON LANGSDORFF, Harald, D-7550 Rastatt 1 (DE)
(74) Vertreter: Klunker . Schmitt-Nilson . Hirsch
(86) Internationale Anmeldenummer: EP9000526
(87) Internationale Veröffentlichungsnummer: WO9012152

(56) Entgegenhaltungen:
- EP-A- 0 063 795
- DE-U- 8 529 784
- DE-U- 8 809 820
- FR-A- 2 249 995
- NL-A- 7 416 437

## Beschreibung

Die Erfindung bezieht sich auf einen Winkelstein aus erhärtendem Material zur Flächenbefestigung, mit zwei Außenseiten, zwei Innenseiten und zwei Stirnseiten.

Winkelsteine sind bekannt (siehe z.B. EP-A-0 063 795). Man kann sie dahingehend charakterisieren, daß zwei unter einem gegenseitigen Winkel verlaufende Steinschenkel dort, wo sie zusammenlaufen, einstückig miteinander vereinigt sind. Winkelsteine haben den Vorteil, daß sich im Verband, also wenn mehrere gleiche Winkelsteine nebeneinander verlegt sind, ein gegenseitiges Umklammern der Winkelsteine ergibt. Dies ist für die Belastbarkeit der befestigten Fläche von Vorteil und auch dann, wenn eine in Verbandanordnung zusammengestellte Gruppe von Winkelsteinen durch einen außen seitlich angreifenden Klemmgreifer gegriffen und so als Gruppe verlegt wird; hierbei ist die Gefahr minimiert, daß einzelne Steine unbeabsichtigt nach unten aus der gegriffenen Gruppe herausfallen, ehe die Gruppe insgesamt verlegt ist. Von gewissem Nachteil ist jedoch bei Winkelsteinen, daß der Vereinigungsbereich der beiden Steinschenkel vergleichsweise hohen Beanspruchungen ausgesetzt ist, wenn seitliche Kräfte an den freien Enden der Steinschenkel angreifen. Es besteht deshalb ein tendenzielles Risiko zu von der Innenecke, wo sich die beiden Innenseiten treffen, ausgehenden Rissen bei Überlastung. Zusätzlich haben die bekannten Winkelsteine den Nachteil, nur in unbedeutendem Maße - durch die Fugen zwischen benachbarten Steinen - Wasser versickern zu lassen.

Der Erfindung liegt die Aufgabe zugrunde, einen Winkelstein verfügbar zu machen, der eine erheblich stärkere Wasserableitung in die befestigte Fläche ermöglicht als es durch die Fugen zwischen benachbart verlegten Winkelsteinen möglich wäre und der ein aufgelockert interessantes, aber dennoch gleichmäßig ruhiges Bild bietet, wenn er im Verband verlegt ist.

Zur Lösung dieser Aufgabe ist der Winkelstein erfindungsgemäß dadurch gekennzeichnet, daß an den fünf Außenecken des Winkelsteins, wo sich die zwei Außenseiten miteinander treffen und sich Außenseiten mit Stirnseiten treffen und sich Innenseiten mit Stirnseiten treffen, Viertelausnehmungen vorgesehen sind; daß an der Mitte der Außenseiten des Winkelsteins Halbausnehmungen vorgesehen sind; und daß an der Innenecke des Winkelsteins, wo sich die zwei Innenseiten miteinander treffen, eine Dreiviertelausnehmung vorgesehen ist; wobei die Viertelausnehmungen, die Halbausnehmungen und die Dreiviertelausnehmung derart vorgesehen sind, daß sich beim Anlegen gleicher Winkelsteine durch gegenseitige Ergänzung überall Vollausnehmungen zur Wasserableitung in die darunterliegende Schicht ergeben.

Bei dem erfindungsgemäßen Winkelstein wurde der zunächst gewagt erscheinende Weg beschritten, durch die vergleichsweise große Dreiviertelausnehmung an der Innenecke gerade im Vereinigungsbereich der beiden Steinschenkel eine Schwächung durch Materialwegnahme vorzunehmen. Es hat sich überraschend gezeigt, daß diese Materialwegnahme ohne negative Ausnehmungen auf die Festigkeit des Winkelsteins bleibt. Dies wird darauf zurückgeführt, daß der kritische, eigentliche Inneneckpunkt weggefallen ist, so daß dieser konkrete Ausgangspunkt für Steinrisse eliminiert ist.

Für den erfindungsgemäßen Winkelstein werden Konfigurationen mit gleich langen Steinschenkeln und/oder mit rechtwinklig zueinander verlaufenden Steinschenkeln bevorzugt. Bevorzugte, konkrete Materialien für den Winkelstein sind zement- oder kunststoffgebundene Betone oder Ziegelmaterialien. Beim verlegefertigen Winkelstein sind diese Materialien erhärtet. Der Winkelstein ist vorzugsweise in einer Mehrzahl von Verlegemustern verlegbar, wie die Ausführungsbeispiele weiter unten noch zeigen werden, und ergibt bei beliebigem gewähltem Verlegemuster die gewünschte Ergänzung der Viertelausnehmungen, der Halbausnehmungen und der Dreiviertelausnehmungen zu Vollausnehmungen. Vorzugsweise weist der Winkelstein im Steininneren keine Löcher oder Öffnungen auf; die verbesserte Wasserableitung in die Unterschicht soll durch die Vollausnehmungen erfolgen. Die Viertelausnehmungen, Halbausnehmungen und Dreiviertelausnehmungen liegen am Rand des Winkelsteins und sind dort problemloser herstellbar als Öffnungen im Steininneren.

Bevorzugt dient der Winkelstein der Belegung bzw. Befestigung von Flächen im Freien. Als bevorzugte Einsatzgebiete seien Straßen, Höfe, Wege, Industriegelände, Plätze, Garageneinfahrten und dergleichen genannt.

In der belegten Fläche kann man die Vollausnehmungen mit einem geeigneten Füllmaterial - beispielsweise Sand, feinem Kies, feinem Splitt, Asche oder dergleichen - vorzugsweise bis zum Niveau der Winkelsteinoberseiten oder etwas darunter auffüllen.

Es ist bevorzugt, wenn die Außenseite des Winkelsteins doppelt so lang wie seine Innenseiten und wie seine Stirnseiten sind. Dies ergibt einen Winkelstein mit ausgewogenen Proportionen und besonders vielfältigen möglichen Verlegemustern.

Vorzugsweise ist der Winkelstein als Verbundstein mit Vor- und Rücksprüngen an allen Seiten zur Verzahnung mit angelegten gleichen Winkelsteinen ausgebildet. Am augenfälligsten werden die Vor- und Rücksprünge, wenn man sie im Vergleich zur Grundgestalt des Winkelsteins betrachtet, bei der die - durch die Viertelausnehmungen, Halbausnehmungen und Dreiviertelausnehmungen weggeschnittenen - fünf Außeneckpunkte und der Inneneckpunkt durch gerade Verbindungslinien miteinander verbunden sind. Wenn beispielsweise an eine Vor- und Rücksprünge aufweisende Außenseite des Winkelsteins zwei gleiche Winkelsteine benachbart angelegt werden, verklammert der erstgenannte Winkelstein die beiden Nachbarsteine formschlüssig miteinander. Es ergibt sich eine besonders hohe Belastungsfähigkeit der befestigten Fläche und ein besonders guter Zusammenhalt einer an sich losen Gruppe von Winkelsteinen bei deren gemeinsamer Verlegung mittels eines Klemmgreifers. Für die konkrete geometrische Gestaltung des Verlaufs der Vor- und Rücksprünge gibt es eine große Vielzahl von Möglichkeiten, von denen die Ausführungsbeispiele weiter unten einige bevorzugte zeigen. Generell sind gezackte oder gewellte Verläufe bevorzugt. Regelmäßige Verläufe ergeben in der Regel die optisch ansprechendsten Winkelsteinkonfigurationen.

Eine besonders bevorzugte Winkelsteinkonfiguration ist dadurch gekennzeichnet, daß - wenn die Viertelausnehmungen, die Halbausnehmungen und die Dreiviertelausnehmung geschlossen gedacht sind - jede Außenseite aus zwei identischen Außenseitenhälften besteht, jede Innenseite einer Außenseitenhälfte entspricht sowie parallel zu dieser ist, und jede Stirnseite einer Innenseite entspricht sowie - generell gesprochen - rechtwinklig zu der angrenzenden Innenseite und der angrenzenden Außenseite angeordnet ist. Diese Gestaltung läßt sich sowohl bei geradlinigen Außenseiten, Innenseiten und Stirnseiten als auch bei Steinseiten mit Vor- und Rücksprüngen verwirklichen.

Eine besonders bevorzugte Ausgestaltung der Erfindung ist dadurch gekennzeichnet, daß an den Viertelausnehmungen, den Halbausnehmungen und der Dreiviertelausnehmung jeweils ein gegenüber der Winkelsteinoberseite abgesetztes Randstreifenstück vorgesehen ist, so daß die Vollausnehmungen von einem abgesetztem Randstreifen umgeben sind. Die Randstreifenstücke können Gefälle in Richtung zu den Ausnehmungen haben, insbesondere schrägflächig bzw. trichterförmig zu den Ausnehmungen abwärts verlaufen. Die Absetzung der Randstreifenstücke gegenüber der Winkelsteinoberseite kann durch das Gefälle vorgesehen sein oder insbesondere auch durch ein stufenartiges Tiefergesetztsein oder auch durch eine Kombination von beidem. Randstreifen mit Gefälle leiten von oben kommendes Wasser trichterartig in die Vollausnehmungen. Insbesondere bei die Vollausnehmungen umgebenden Randstreifen mit Gefälle zu den Ausnehmungen können beispielsweise erdige Verschmutzungen der Oberseiten der "Füllmaterialstopfen" vergleichsweise leicht abgekehrt werden, auch mit Kehrmaschinen, weil die Kehrborsten an den Rändern der Vollausnehmungen auf Aufstandsflächen treffen. Das Ergebnis ist eine regenerierbare, insgesamt wasserdurchgängige Flächenbefestigung, bei der etwaig verstopfend wirkende Verschmutzungen im oberen Bereich der "Füllmaterialstopfen" problemlos wieder entfernbar sind.

Es wird darauf hingewiesen, daß die im vorstehenden Absatz beschriebenen Maßnahmen auch bei Steinen aus zementgebundenem Material zur Flächenbefestigung verwirklicht werden können, die ansonsten nicht die im Anspruch 1 genannten Merkmale aufweisen. Konkret kann es sich um Steine handeln, die nicht winkelförmig sind und/oder die sich zu Vollausnehmungen ergänzende Teilausnehmungen aufweisen, die nicht unbedingt sowohl Viertelausnehmungen an den Außenecken, Halbausnehmungen an der Mitte der Außenseiten und eine Dreiviertelausnehmung an der Innenecke sind.

Vorzugsweise ist die Winkelsteinoberseite durch zwei Scheinfugen in drei optisch gleiche Oberseitenbereiche unterteilt. Dies führt dazu, daß die Winkelsteinorientierung in der befestigten Fläche praktisch nicht mehr erkennbar ist. Ein analoges Ergebnis ergibt sich, wenn - wie ebenfalls bevorzugt - an der Winkelsteinoberseite drei untereinander gleiche Erhöhungsbereiche vorgesehen sind.

Nach einer besonders bevorzugten Ausgestaltung sind an der Winkelsteinoberseite Scheinfugen vorgesehen, die in die Halbausnehmungen und die Dreiviertelausnehmung ausmünden oder zu den entsprechenden Randstreifenstücken ausmünden. Das Ergebnis ist eine besonders effiziente Wasserableitung zu den "scheinfugenangeschlossenen" Vollausnehmungen. Es wird ausdrücklich darauf hingewiesen, daß die Maßnahme des "Scheinfugenanschlusses" von Teilausnehmungen bzw. deren Randstreifenstücken bei Steinen aus zementgebundenem Material zur Flächenbefestigung auch für sich, also ohne gleichzeitige Verwirklichung der im Anspruch 1 angegebenen Merkmale, eine technisch sinnvolle Bedeutung hat und für sich verwirklichbar ist.

Vorzugsweise sind die Vollausnehmungen zwischen den Winkelsteinen in der Draufsicht quadratisch oder rund.

Die erfindungsgemäß ermöglichte, erheblich verstärkte Wasserableitung in die belegte Fläche durch die Vollausnehmungen, die einen deutlich größeren Gesamt-Wasserableitungsquerschnitt darbieten als die Fugen zwischen den verlegten Steinen, führt dazu, daß befestigte Flächen nicht mehr an eine Kanalisation angeschlossen werden müssen. Hierdurch und durch Einsparungen bei Kanalisation und Kläranlagen werden wesentliche Kosten gespart. Von oben kommendes Wasser, insbesondere Regenwasser, wird vielmehr in den Untergrund geleitet und trägt dazu bei, den Grundwasserspiegel in erwünschter Weise möglichst hoch zu halten. In der Nähe wachsende Pflanzen erhalten genügend Wasser. Außerdem ergibt sich selbst bei heftigen Regenfällen kein Wasserstau auf der befestigten Fläche, da das Wasser an vielen Stellen verteilt in den Untergrund abgeleitet wird. Wenn Scheinfugen und/oder vertiefte Bereiche zwischen Erhöhungsbereichen vorhanden sind, ergibt sich ein besonders schnelles Entwässern und Abtrocknen der belegten Fläche.

Schließlich wird darauf hingewiesen, daß die Vollausnehmungen auch durch mit Wasserableitungskanälen versehene Stopfen z.B. aus Kunststoff teilverschlossen werden können.

Die Erfindung und Ausgestaltungen der Erfindung werden im folgenden anhand von zeichnerisch dargestellten, bevorzugten Ausführungsbeispielen noch näher erläutert.
Es zeigt:
- Fig. 1: eine erste Ausführungsform eines Winkelsteins mit Teilausnehmungen;
- Fig. 2: eine zweite Ausführungsform eines Winkelsteins mit Teilausnehmungen;
- Fig. 3: eine dritte Ausführungsform eines Winkelsteins mit Teilausnehmungen und Erhöhungsbereichen;
- Fig. 4: eine vierte Ausführungsform eines Winkelsteins mit Teilausnehmungen und Randstreifenstücken;
- Fig. 5: einen Ausschnitt einer mit Winkelsteinen gemäß Fig. 4 befestigten Fläche;
- Fig. 6: einen Vertikalschnitt längs VI-VI in Fig. 5;
- Fig. 7: den Flächenausschnitt gemäß Fig. 5, jedoch mit Auffüllung der Vollausnehmungen;
- Fig. 8: mehrere mögliche Verlegemuster von Winkelsteinen in schematisierter Darstellung.

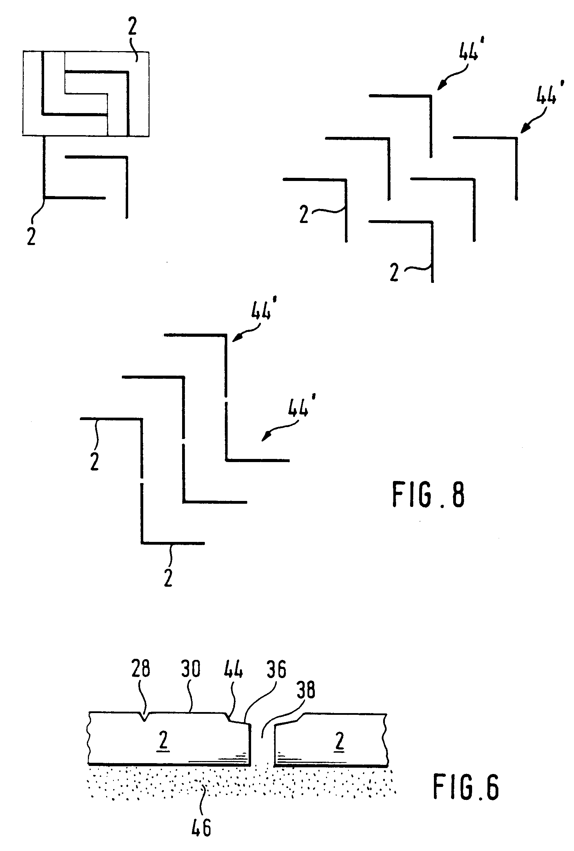

Sämtliche Zeichnungsfiguren mit Ausnahme von Fig. 6 zeigen die Steine bzw. die befestigte Fläche in Draufsicht.

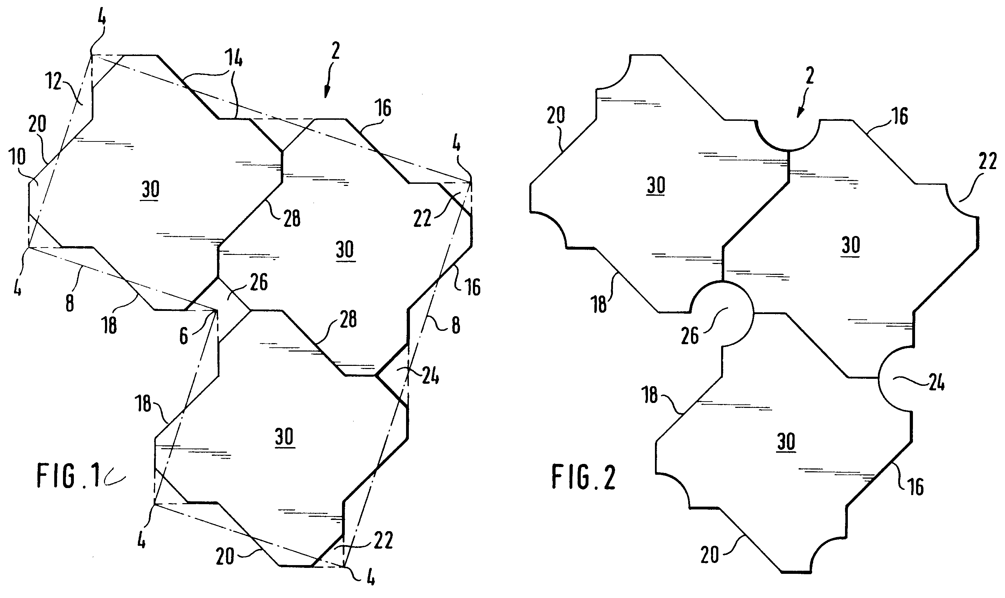

Der in Fig. 1 dargestellte Winkelstein 2 hat fünf Außeneckpunkte 4 und einen Inneneckpunkt 6. Wenn man zwischen diesen Eckpunkten 4, 6 gerade Verbindungslinien 8 zieht, erhält man die Grundgestalt des Winkelsteins 2. Diese Grundgestalt kann man dadurch charakterisieren, daß zwei gleich lange, rechtwinklig zueinander verlaufende Steinschenkel längs eines unter 45° schräg verlaufenden Verbindungsbereichs, der von dem Inneneckpunkt 6 zum gegenüberliegenden Außeneckpunkt 4 führt, miteinander vereinigt sind.

Die Winkelsteinseiten haben einen Verlauf, der - wenn man zunächst die weiter unten beschriebenen Teilausnehmungen außer acht läßt - mit Vorsprüngen 10 und Rücksprüngen 12 um die Verbindungslinien 8 pendelt. Der Verlauf der Steinseiten mit den Vorsprüngen 10 und den Rücksprüngen 12 ist durch geradlinige Seitenabschnitte 14 definiert, die winklig zu den Verbindungslinien 8 verlaufen, wobei ein Teil der Seitenabschnitte 14 einen größeren Winkel mit den Verbindungslinien 8 einschließt und der restliche Teil der Seitenabschnitte einen kleineren Winkel mit den Verbindungslinien 8 einschließt. Auf diese Weise sind zwei Außenseiten 16, die generell gesprochen rechtwinklig zu einander verlaufen, zwei Innenseiten 18, die generell gesprochen rechtwinklig zu einander verlaufen, und zwei Stirnseiten 20, die generell gesprochen rechtwinklig sowohl zu der anschließenden Außenseite 16 als auch zu der anschließenden Innenseite 18 verlaufen, gebildet.

An den fünf Außeneckpunkten 4, wo sich die zwei Außenseiten 16 treffen oder wo sich eine Außenseite 16 und eine Stirnseite 20 treffen oder wo sich eine Stirnseite 20 und eine Innenseite 18 treffen, ist jeweils eine dreieckige Viertelausnehmung 22 vorgesehen. Oder mit anderen Worten: Dort ist der eigentliche Außeneckpunkt schräg weggeschnitten. An dem Inneneckpunkt 6, wo sich die beiden Innenseiten 18 treffen, ist eine Dreiviertelausnehmung 26 vorgesehen, die die Gestalt eines Quadrats mit fehlendem Dreieckssektor hat. Oder mit anderen Worten: Dort ist von dem Stein 2 ein Materialbereich weggeschnitten, der durch drei Quadratseiten begrenzt ist. Im mittleren Bereich jeder Außenseite 16 ist eine dreieckförmige Halbausnehmung 24 vorgesehen. Oder mit anderen Worten: Dort ist vom Stein 2 ein Materialbereich weggeschnitten, der durch zwei Dreiecksseiten definiert ist. Die Halbausnehmungen 24 sind jeweils flächenmäßig doppelt so groß wie die Viertelausnehmungen 22, und die Dreiviertelausnehmung 26 ist flächenmäßig dreimal so groß wie eine Viertelausnehmung 22.

Außerdem erkennt man in Fig. 1 zwei Scheinfugen 28, die jeweils von der Dreiviertelausnehmung 26 zu der gegenüberliegenden Halbausnehmung 24 verlaufen. Durch die Scheinfugen 28 wird die Winkelsteinoberseite optisch in drei gleiche Oberseitenbereiche unterteilt. Im Vertikalschnitt sind die Scheinfugen beispielsweise im wesentlichen dreieckförmig oder umgekehrt trapezförmig. Sie sind einige Millimeter tief.

Am Übergang von der Steinoberseite in die vertikalen Steinseiten ist vorzugsweise überall eine kleine Fase vorgesehen, die aus Übersichtsgründen nicht eingezeichnet ist.

Wenn man sich die beschriebenen Teilausnehmungen 22, 24, 26 geschlossen bzw. nicht vorhanden vorstellt, bestehen die Außenseiten 16 jeweils aus zwei aneinandergesetzten, identischen Hälften, verläuft jede Innenseite 18 parallel zur gegenüberliegenden Außenseitenhälfte und entspricht dieser, und entspricht jede Stirnseite 20 einer anschließenden Innenseite 18 oder einer anschließenden Außenseitenhälfte, allerdings um 90° gedreht. Die Scheinfugen 28 verlaufen jeweils parallel zu einer zugeordneten Stirnseite 20.

Wenn man mehrere der in Fig. 1 gezeichneten Winkelsteine 2 benachbart in einem von mehreren möglichen Verlegemustern verlegt, ergänzen sich überall auf der befestigten Fläche die Viertelausnehmungen 22, Halbausnehmungen 24 und Dreiviertelausnehmungen 26 zu quadratischen Vollausnehmungen überall gleicher Größe. Es ergibt sich ein Bild der belegten Fläche, das durch einen regelmäßigen Wechsel von Oberseitenbereichen 30 und Vollausnehmungen geprägt ist und dadurch einerseits aufgelockert und interessant, aber andererseits gleichmäßig und ruhig wirkt.

Der Winkelstein 2 gemäß Fig. 2 unterscheidet sich vom Winkelstein 2 gemäß Fig. 1 lediglich durch die Form der Teilausnehmungen 22, 24, 26. Die Viertelausnehmungen 22 sind viertelkreisförmig, die Halbausnehmungen 24 sind halbkreisförmig, und die Dreiviertelausnehmung 26 ist dreiviertelkreisförmig.

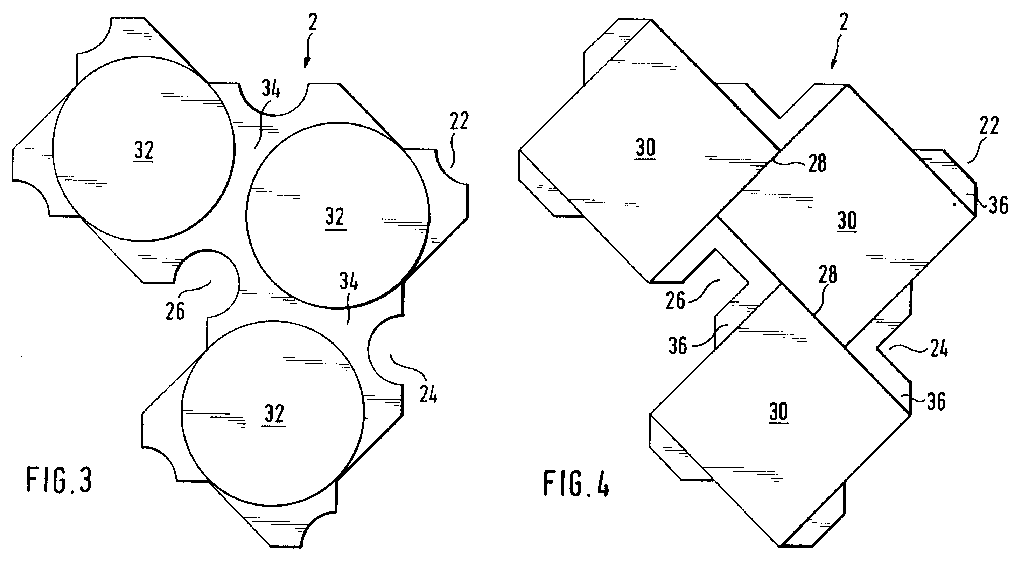

Der Winkelstein 2 gemäß Fig. 3 unterscheidet sich vom Winkelstein 2 gemäß Fig. 2 lediglich dadurch, daß keine Scheinfugen 28 vorhanden sind, aber drei gleiche, regelmäßig auf der Winkelsteinoberseite verteilte, kreisförmige Erhöhungsbereiche 32. Zwischen den Erhöhungsbereichen 32 befinden sich rinnenartig-flächige, tiefergesetzte Bereiche 34, durch die Wasser zu den Ausnehmungen fließen kann.

Der Winkelstein 2 gemäß Fig. 4 unterscheidet sich vom Winkelstein 2 gemäß Fig. 1 durch kürzere, geradlinige Scheinfugen 28 und Randstreifenstücke 36 an den Teilausnehmungen 22, 24, 26. Die Randstreifenstücke 36 haben entweder eine waagerechte Oberseite und sind gegenüber der restlichen Winkelsteinoberseite stufenförmig tiefergesetzt. Oder die Randstreifenstücke 36 haben ein ebenflächiges Gefälle in Richtung zur jeweiligen Teilausnehmung 22, 24, 26 hin. Oder es ist eine Kombination dieser beiden Maßnahmen vorgesehen. Die Randstreifenstücke 36 verlaufen entlang der Teilausnehmungsränder mit gleichbleibender Breite, wobei sie an den Enden jeweils schräg beendet sind. Wegen der Randstreifenstücke 36 ist von den Scheinfugen 28 nur der geradlinige, mittlere Bereich verblieben. Die Scheinfugen 28 münden zu den Randstreifenstücken 36 aus.

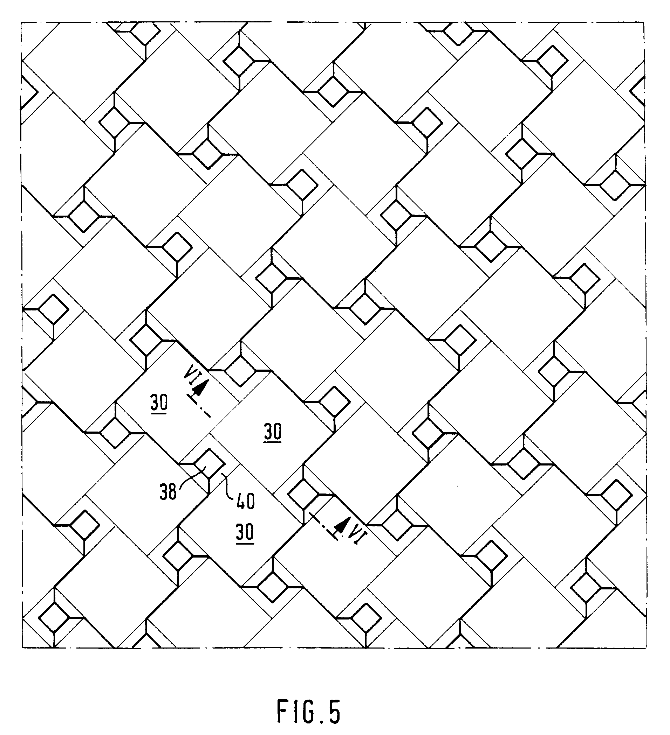

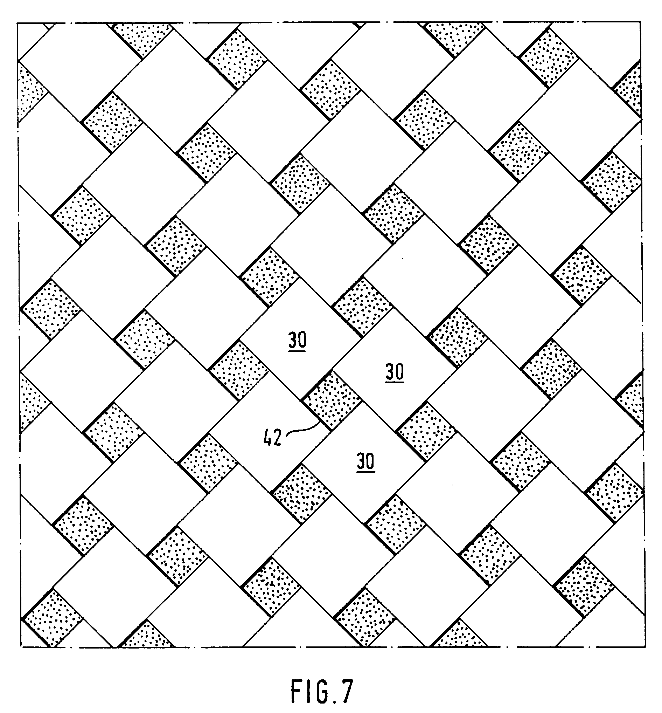

Fig. 5 veranschaulicht, wie eine mit den Winkelsteinen 2 gemäß Fig. 4 befestigte Fläche aussieht. Man erkennt den regelmäßigen Wechsel von quadratischen Oberseitenbereichen 30 und quadratischen Vollausnehmungen 38, die jeweils von einem quadratisch umlaufenden, abgesetzten Randstreifen 40 umgeben sind. Die umlaufenden Randstreifen 40 setzen sich aus Viertel-Randsstreifenstücken, Halb-Randstreifenstücken und Dreiviertel-Randstreifenstücken zusammen.

Bei dem Vertikalschnitt von Fig. 6 erkennt man, daß die Scheinfugen 28 im Schnitt im wesentlichen die Gestalt eines auf der Spitze stehenden, etwas abgerundeten Dreiecks haben und daß die Winkelsteinoberseite ringsherum eine kleine Fase 44 hat, die ebenso tief reicht wie die Scheinfuge 28. Das gezeichnete Randstreifenstück 36 verläuft dachartig schräg abwärts zu der Vollausnehmung 38 und setzt am unteren Ende des dortigen Bereichs der Fase 44 an. Die Winkelsteine 2 sind auf einer Unterschicht 46 aus Sand oder dergleichen verlegt.

Fig. 7 veranschaulicht, wie die befestigte Fläche aussieht, nachdem die Vollausnehmungen 38 mit einem geeigneten Füllmaterial 42 ausgefüllt sind. Das Füllmaterial 42 kann, wie gezeichnet, die Oberseiten der Randstreifen 40 mit geringer Schichtdicke abdecken, muß es aber nicht. Im erstgenannten Fall bietet die befestigte Fläche das Bild von regelmäßig abwechselnden größerquadratischen Erhöhungsbereichen 30 und kleinerquadratischen Bereichen mit Füllmaterial 42.

Sämtliche gezeichneten Ausführungsbeispiele hatten Steinseiten mit einem zick-zack-artigen Vorsprungs/Rücksprungs-Verlauf. Stattdessen können andere Verläufe der Steinseiten, beispielsweise im wesentlichen wellenförmig, gewählt werden. Entsprechendes gilt für die Scheinfugen 28.

Fig. 8 zeigt mehrere Möglichkeiten, wie erfindungsgemäße Winkelsteine 2 im Verband bzw. im Verlegemuster verlegt werden können, wobei jeder Winkelstein 2 lediglich durch eine Winkellinie dargestellt ist. Fig. 8 oben zeigt eine Variante, bei der jeweils zwei Winkelsteine 2 gegensinnig aneinandergesetzt sind, so daß sie ein rechteckiges Belagstück ergeben. Fig. 8 Mitte zeigt eine Variante, bei der die einzelnen Winkelsteine in gleichsinnig orientierten Reihen 44' angeordnet sind; innerhalb jeder Reihe 44' liegt die Innenecke 6 eines Winkelsteins an einer Außenecke 4, wo sich die beiden Außenseiten 16 treffen, eines benachbarten Winkelsteins 2. Die in Fig. 8 unten gezeichnete Variante unterscheidet sich hiervon lediglich dadurch, daß die Reihen 44' abwechselnd gegensinnig orientiert sind. Das in Fig. 5 gezeichnete Verlegemuster entspricht der Variante von Fig. 8 Mitte, wie man an den Randstreifenstücken 36 sieht. Bei allen der möglichen Verlegemuster - und das sind noch mehr als in Fig. 8 gezeichnet - ergibt sich eine gegenseitige Ergänzung der Viertelausnehmungen 22, Halbausnehmungen 24 und Dreiviertelausnehmungen 26 zu Vollausnehmungen 38.

## Patentansprüche

1. Winkelstein (2) aus erhärtendem Material zur Flächenbefestigung, mit zwei Außenseiten (16), zwei Innenseiten (18) und zwei Stirnseiten (20),
dadurch gekennzeichnet,
daß an den fünf Außenecken (4) des Winkelsteins (2),
wo sich die zwei Außenseiten (16) miteinander treffen und sich Außenseiten (16) mit Stirnseiten (20) treffen und sich Innenseiten (18) mit Stirnseiten (20) treffen, Viertelausnehmungen (22) vorgesehen sind;
daß an der Mitte der Außenseiten (16) des Winkelsteins (2) Halbausnehmungen (24) vorgesehen sind;
und daß an der Innenecke (6) des Winkelsteins (2), wo sich die zwei Innenseiten (18) miteinander treffen, eine Dreiviertelausnehmung (26) vorgesehen ist;
wobei die Viertelausnehmungen (22), die Halbausnehmungen (24) und die Dreiviertelausnehmung (26) derart vorgesehen sind, daß sich beim Anlegen gleicher Winkelsteine (2) durch gegenseitige Ergänzung überall Vollausnehmungen (38) zur Wasserableitung in die darunterliegende Schicht ergeben.

2. Winkelstein (2) nach Anspruch 1,
dadurch gekennzeichnet,
daß die Außenseiten (16) doppelt so lang wie die Innenseiten (18) und wie die Stirnseiten (20) sind.

3. Winkelstein (2) nach Anspruch 1 oder 2,
dadurch gekennzeichnet,
daß er als Verbundstein mit Vor- und Rücksprüngen (10, 12) an allen Seiten zur Verzahnung mit angelegten, gleichen Winkelsteinen (2) ausgebildet ist.

4. Winkelstein (2) nach Anspruch 3,
dadurch gekennzeichnet,
daß - wenn die Viertelausnehmungen (22), die Halbausnehmungen (24) und die Dreiviertelausnehmung (26) geschlossen gedacht sind - jede Außenseite (16) aus zwei identischen Außenseitenhälften besteht, jede Innenseite (18) einer Außenseitenhälfte entspricht sowie parallel zu dieser ist, und jede Stirnseite (20) einer Innenseite (18) entspricht sowie - generell gesprochen - rechtwinklig zu der angrenzenden Innenseite (18) und der angrenzenden Außenseite (16) angeordnet ist.

5. Winkelstein (2) nach einem der Ansprüche 1 bis 4, dadurch gekennzeichnet,
daß an den Viertelausnehmungen (22), den Halbausnehmungen (24) und der Dreiviertelausnehmung (26) ein gegenüber der Winkelsteinoberseite abgesetztes Randstreifenstück (36) vorgesehen ist, so daß die Vollausnehmungen (38) von einem abgesetzten Randstreifen (40) umgeben sind.

6. Winkelstein (2) nach Anspruch 5,
dadurch gekennzeichnet,
daß die Randstreifenstücke (36) Gefälle in Richtung zu den Ausnehmungen (22; 24; 26; 38) haben.

7. Winkelstein (2) nach einem der Ansprüche 1 bis 6,
dadurch gekennzeichnet,
daß die Winkelsteinoberseite durch zwei Scheinfugen (28) in drei optisch gleiche Oberseitenbereiche (30) unterteilt ist.

8. Winkelstein (2) nach einem der Ansprüche 1 bis 7,
dadurch gekennzeichnet,
daß an der Winkelsteinoberseite drei untereinander gleiche Erhöhungsbereiche (32) vorgesehen sind.

9. Winkelstein (2) nach einem der Ansprüche 1 bis 8,
dadurch gekennzeichnet,
daß an der Winkelsteinoberseite Scheinfugen (28) vorgesehen sind, die in die Halbausnehmungen (24) und die Dreiviertelausnehmung (26) ausmünden oder zu den entsprechenden Randstreifenstücken (36) nach Anspruch 5 ausmünden.

10. Winkelstein (2) nach einem der Ansprüche 1 bis 9,
dadurch gekennzeichnet,
daß die Vollausnehmung (38) quadratisch oder rund ist.

## Claims

1. An angular paving stone (2) of solidifying material for paving areas, comprising two outer sides (16), two inner sides (18) and two face sides (20),
characterized in that quarter recesses (22) are provided at the five outer corners (4) of the angular paving stone (2) where the two outer sides (16) meet and outer
sides (16) meet face sides (20) an inner sides (18) meet face sides (20);
that half recesses (24) are provided at the center of the outer sides (16) of the angular paving stone (2);
and in that a three-quarter recess (26) is provided at the inner corner (6) of the angular paving stone (2) where the two inner sides (18) meet;
the quarter recesses (22), the half recesses (24) and the three-quarter recess (26) being provided such that,
when like angular paving stones (2) are laid adjacent thereto, full recesses (38) are formed at all locations by mutual supplementation for discharging water into the layer located underneath.

2. An angular paving stone (2) according to claim 1,
characterized in that the outer sides (16) are twice as long as the inner sides (18) and as the face sides (20).

3. An angular paving stone (2) according to claim 1 or 2,
characterized in that it is designed as an interlocking paving stone having protrusions (10) and retractions (12) on all sides for interlocking engagement with like angular paving stones (2) placed thereagainst.

4. An angular paving stone (2) according to claim 3,
characterized in that - when the quarter recesses (22), the hale recesses (24) and the three-quarter recess (26) are conceived of as being closed - each outer side (16) consists of two identical outer side halves, each inner side (18) corresponds to an outer side half and is parallel thereto, and each face side (20) corresponds to an inner side (18) and - generally speaking - is disposed at right angles to the adjacent inner side (18) and the adjacent outer side (16).

5. An angular paving stone (2) according to any one of claims 1 to 4,
characterized in that the quarter recesses (22), the half recesses (24) and the three-quarter recess (26) each have provided thereon a marginal strip piece (36) that is set off with respect to the top side of the angular paving stone, so that the full recesses (38) are surrounded by a set off marginal strip (40).

6. An angular paving stone (2) according to claim 5,
characterized in that the marginal strip pieces (36) have downward slopes in the direction towards the recesses (22; 24; 26; 38).

7. An angular paving stone (2) according to any one of claims 1 to 6,
characterized in that the top side of the angular paving stone (2) is subdivided by two dummy gaps (28) into three optically alike top side portions (30).

8. An angular paving stone (2) according to any one of claims 1 to 7,
characterized in that three mutually alike raised portions (32) are provided on the top side of the angular paving stone (2).

9. An angular paving stone (2) according to any one of claims 1 to 8,
characterized in that the top side of the angular paving stone (2) is provided with dummy gaps (28) terminating in the half recesses (24) and the three-quarter recess (26) or terminating in the corresponding marginal strip pieces (36) according to claim 5.

10. An angular paving stone (2) according to any one of claims 1 to 9,
characterized in that the full recess (38) is of square or round configuration.

## Revendications

1. Pavé à contour angulaire (2) en matériau durcissable pour la consolidation de surfaces, comportant deux faces extérieures (16), deux faces intérieures (18) et deux faces frontales (20), caractérisé en ce que sur les cinq angles extérieurs (4) du pavé à contour angulaire (2), où se rencontrent entre elles les deux faces extérieures (16) et se rencontrent les faces extérieures (16) avec les faces frontales (20) et où se rencontrent les faces intérieures (18) avec les faces frontales (20), il est prévu des quarts d'évidement (22), en ce qu'au milieu des faces extérieures (16) du pavé à contour angulaire (2) sont prévus des demi-évidements (24), et en ce qu'à l'angle intérieur (6) du pavé à contour angulaire (2), la où se rencontrent entre elles les deux faces intérieures (18), il est prévu un trois quarts d'évidement (26), les quarts d'évidement (22), les demi-évidements (24) et le trois quarts d'évidement (26) étant prévus de manière qu'en cas de pose de pavés à contour angulaire (2) identiques, il en résulte partout, par complément réciproque, des évidements entiers (38) pour l'évacuation de l'eau dans la couche sous-jacente.

2. Pavé à contour angulaire (2) selon la revendication 1, caractérisé en ce que les faces extérieures (16) sont deux fois plus longues que les faces intérieures (18) et que les faces frontales (20).

3. Pavé à contour angulaire (2) selon les revendications 1 ou 2, caractérisé en ce qu'il est conçu en tant que pavé composite avec parties saillantes (10) et parties en retrait (12) sur toutes les faces, pour s'emboîter avec des pavés à contour angulaire (2) identiques posés à côté.

4. Pavé à contour angulaire (2) selon la revendication 3, caractérisé en ce que - lorsque les quarts d'évidement (22), les demi-évidements (24) et le trois quarts d'évidement (26) sont imaginés fermés - chaque face extérieure (16) est constituée de deux demi-faces extérieures identiques, chaque face intérieure (18) correspond à une demi-face extérieure et est parallèle à celle-ci, et chaque face frontale (20) correspond à une face intérieure (18) et - d'une manière générale - elle est disposée à angle droit par rapport à la face intérieure (18) adjacente et à la face extérieure (16) adjacente.

5. Pavé à contour angulaire (2) sel on l'une des revendications 1 à 4, caractérisé en ce qu'il est prévu sur les quarts d'évidement (22), les demi-évidements (24) et le trois quarts d'évidement (26), une pièce de bordure en bande (36) décalée par rapport à la face supérieure du pavé à contour angulaire, ce qui fait que les évidements complets (38) sont entourés par une bande de bordure (40) décalée.

6. Pavé à contour angulaire (2) selon la revendication 5, caractérisé en ce que les pièces de bordure en bande (26) ont une pente en direction des évidements (22 ; 24 ; 26 ; 38).

7. Pavé à contour angulaire (2) selon l'une des revendications 1 à 6, caractérisé en ce que la face supérieure du pavé à contour angulaire est partagée par deux faux joints (28) en trois zones de face supérieure (30) optiquement identiques.

8. Pavé à contour angulaire (2) selon l'une des revendications 1 à 7, caractérisé en ce que sur la face supérieure du pavé à contour angulaire sont prévues trois zones en relief (32) identiques entre elles.

9. Pavé à contour angulaire (2) selon l'une des revendications 1 à 8, caractérisé en ce que sur la face supérieure du pavé à contour angulaire sont prévus des faux joints (28) qui débouchent dans les demiévidements (24) et le trois quarts d'évidement (26) ou débouchent vers les pièces de bordure en bande (36) correspondantes sel on la revendication 5.

10. Pavé à contour angulaire (2) selon l'une des revendications 1 à 9, caractérisé en ce que l'évidement complet (38) est carré ou rond.
